# EUROPÄISCHE PATENTANMELDUNG

(11) **EP 4 682 615 A1**
(43) Veröffentlichungstag der Anmeldung: **21.01.2026**
(21) Anmeldenummer: 24189813.9
(22) Anmeldetag: 19.07.2024
(51) Int. Cl.: G02B 26/00, G02B 7/00, G02B 7/16, G02B 21/22, G02B 21/24

(54) **WECHSLER FÜR OPTISCHE ELEMENTE UND OPTISCHES INSTRUMENT MIT WECHSLER**

(71) Anmelder: ATMOS MedizinTechnik GmbH & Co. KG, 79853 Lenzkirch (DE)
(72) Erfinder: Boysen, Björn, 79853 Lenzkirch (DE); Reinhardt, Carsten, 79853 Lenzkirch (DE)
(74) Vertreter: Westphal, Mussgnug & Partner Patentanwälte mbB

(57) **Zusammenfassung**

Bereitgestellt werden ein Wechsler für optische Elemente eines optischen Instruments, wobei das optische Instrument mindestens einen Betrachtungskanal und mindestens einen Beleuchtungskanal aufweist, wobei der Wechsler einen ersten Träger für optische Elemente aufweist, der um eine Mittelachse herum drehbar gelagert ist und ferner einen zweiten Träger für optische Elemente aufweist, der um dieselbe Mittelachse herum drehbar gelagert ist wie der erste Träger, wobei auf dem ersten Träger eine Anzahl M von optischen Elementen zur Beeinflussung von Licht im Betrachtungskanal oder im Beleuchtungskanal aufweist, die einen Satz von M1 sequentiell angeordneten optischen Elementen umfasst, mit denen dem Licht im Betrachtungskanal oder im Beleuchtungskanal M1 unterschiedliche Eigenschaften aufgeprägt werden können, wobei auf dem zweiten Träger eine Anzahl N von optischen Elementen zur Beeinflussung von Licht im Beleuchtungskanal oder im Betrachtungskanal aufweist, die einen Satz von N1 sequentiell angeordneten optischen Elementen umfasst, mit denen dem Licht im Beleuchtungskanal oder im Betrachtungskanal N1 unterschiedliche Eigenschaften aufgeprägt werden können, wobei die auf dem ersten Träger für optische Elemente angeordneten optischen Elementen jeweils in einem ersten Abstand von der Mittelachse so angeordnet sind, dass der Abstand zwischen zueinander benachbarten dieser optischen Elemente zumindest für die M1 sequentiell angeordneten Elemente gleich groß ist, wobei die auf dem zweiten Träger für optische Elemente angeordneten optischen Elemente jeweils in einem zweiten Abstand von der Mittelachse so angeordnet sind, dass der Abstand zwischen zueinander benachbarten dieser optischen Elemente zumindest für die N1 sequentiell angeordneten Elemente gleich groß ist, wobei der zweite Abstand größer als der erste Abstand ist, wobei der erste Träger (110) und der zweite Träger (120) derart ausgeführt sind, dass sie Öffnungen oder transparente Bereiche zum Ermöglichen des Durchtritts von Licht an den Stellen, die vor oder hinter einem optischen Element des jeweils anderen Trägers liegen, wenn beide optischen Elemente wirksam in den jeweiligen Betrachtungs- oder Beleuchtungskanal eingebracht sind, aufweisen und ein optisches Instrument mit einem solchen Wechsler.

## Beschreibung

Wechsler für optische Elemente sind Baugruppen, die bei einer Vielzahl optischer Instrumente Verwendung finden, bei denen in einem Beleuchtungskanal und/oder in einem Betrachtungskanal bestimmte Eigenschaften des Lichts beziehungsweise eines Teils des Strahlengangs gezielt verändert werden können, wie z.B. die Frequenz durch Farbfilter, die Polarisation durch Polarisationsfilter oder der Strahlengang durch Blenden, Gitter oder Linsen. Eine weitere Alternative, sind Strichplatten, die entweder in den Beleuchtungs- oder in den Betrachtungskanal eingefügt werden können. Strichplatten ändern nicht prinzipiell die Eigenschaft des transmittierten Lichtes, sondern nur eines kleinen Teil des Strahlengangs, der für die Abbildung der darauf enthaltenden Muster sorgt.

Angemerkt sei schon an dieser Stelle, dass im Sinne dieser Offenbarung ein Betrachtungskanal sowohl für die visuelle Betrachtung ausgelegt sein kann, als auch für die Betrachtung mittel eines Aufzeichnungsmediums, wie z.B. eine CCD- oder CMOS-Kamera.

Eine im Stand der Technik weit verbreitete Art und Weise, solche Wechsler für optische Elemente zu gestalten besteht darin, den gewünschten Satz optischer Elemente auf einem Träger, der um eine zentrale Achse drehbar ist, so anzuordnen, dass die optischen Elemente in gleichem Abstand von der zentralen Achse angeordnet sind. Diese zentrale Achse wird dann in diesem Abstand vom Beleuchtungs- und/oder Betrachtungskanal des optischen Instruments gelagert, so dass durch Drehung des Trägers die verschiedenen optischen Elemente des Satzes optischer Elemente in den Strahlengang des Beleuchtungs- und/oder Betrachtungskanals eingebracht werden können.

Es gibt auch noch die Option, dass Kanäle sowohl für Beleuchtung als auch Betrachtung verwendet werden. Z.B. wenn die Beleuchtung per Strahlteiler in den Betrachtungsstrahlengang eingekoppelt wird. Dann können die anderen Kanäle stattdessen für eine zusätzliche Beleuchtung anderer Wellenlänge oder Polarisation verwendet werden.

Vorzugsweise ist dabei der Abstand zwischen benachbarten optischen Elementen des Trägers gleich, so dass das Wechseln von einem der optischen Elemente des Trägers auf das zu diesem benachbarte optische Element des Trägers jeweils durch eine Drehung um denselben Winkel erfolgt.

Wenn das optische Instrument zwei gleichartige Beleuchtungs- oder Betrachtungskanäle aufweist, wie es beispielsweise bei einem Stereomikroskop oder Exoskop der Fall ist, und wenn diesen durch die optischen Elemente des Wechslers dieselben optischen Eigenschaften aufgeprägt werden sollen oder feste Kombinationen von optischen Eigenschaften durch die optischen Elemente des Wechslers aufgeprägt werden sollen, ist dies mit dem oben genannten Aufbau möglich, indem die Achse des optischen Wechslers auf einer Verbindungslinie zwischen den gleichartigen Beleuchtungs- oder Betrachtungskanälen angeordnet wird, so dass einander gegenüber liegende optische Elemente jeweils gleichzeitig in den Strahlengang der beiden gleichartigen Beleuchtungs- oder Betrachtungskanäle eingebracht werden. Die Vielzahl unterschiedlicher einstellbarer Zustände kann dann dadurch gesteigert werden, dass mehrere solcher Wechsler für optische Elemente hintereinander auf derselben Achse angeordnet werden. Derartige Konfigurationen, die relativ kompakt zu realisieren sind, offenbaren z.B. die DE 10 2009 011 681 A1 oder die DE 10 2020 100 676 B3.

Eine größere Vielzahl von Zustandskombinationen kann alternativ dazu dadurch realisiert werden, dass jeder der beiden gleichartigen Beleuchtungs- oder Betrachtungskanäle jeweils mit einem eigenen Wechsler für optische Elemente ausgestattet wird, wie es z.B. die DE 103 36 890 A1 vorschlägt. Naturgemäß führt dies aber einerseits zu einer erheblichen Erhöhung des benötigten Bauraums und andererseits zu höheren Kosten, weil die entsprechenden Wechsler auch separat angetrieben werden müssen.

Noch komplexer und aufwändiger wird die Situation, wenn sowohl Betrachtungs- als auch Beleuchtungskanäle vorhanden sind, für die jeweils mit einem Wechsler für optische Elemente bestimmte optische Eigenschaften definiert werden sollen. Ein Beispiel für ein solches System mit drei unabhängig voneinander ansteuerbaren Wechslern für optische Elemente ist der DE 10 2006 004 232 A1 zu entnehmen.

Die Aufgabe der Erfindung besteht daher darin, einen kompakten und kostengünstigen Wechsler für optische Elemente bereitzustellen, mit dem optische Eigenschaften von mindestens einem Beleuchtungs- und mindestens einem Betrachtungskanal unabhängig voneinander variiert werden können und ein optisches Instrument mit einem solchen Wechsler für optische Elemente bereitzustellen.

Diese Aufgabe wird gelöst durch einen Wechsler für optische Elemente mit den Merkmalen des Patentanspruchs 1 und ein optisches Instrument mit den Merkmalen des Patentanspruchs 9. Vorteilhafte Weiterbildungen der Erfindung sind Gegenstand der jeweiligen abhängigen Ansprüche.

Der erfindungsgemäße Wechsler für optische Elemente wechselt optische Elemente eines optischen Instruments, das mindestens einen Betrachtungskanal und mindestens einen Beleuchtungskanal aufweist.

Der erfindungsgemäße Wechsler weist einen ersten Träger für optische Elemente auf, der um eine Mittelachse herum drehbar gelagert ist und ferner einen zweiten Träger für optische Elemente auf, der um dieselbe Mittelachse herum drehbar gelagert ist wie der erste Träger.

Auf dem ersten Träger sind eine Anzahl M von optischen Elementen zur Beeinflussung von Licht im Betrachtungskanal oder im Beleuchtungskanal angeordnet, die einen Satz von M1 sequentiell angeordneten optischen Elementen umfasst, mit denen dem Licht im Betrachtungskanal oder im Beleuchtungskanal M1 unterschiedliche Eigenschaften aufgeprägt werden können; auf dem zweiten Träger ist eine Anzahl N von optischen Elementen zur Beeinflussung von Licht im Beleuchtungskanal oder im Betrachtungskanal angeordnet, die einen Satz von N1 sequentiell angeordneten optischen Elementen umfasst, mit denen dem Licht im Beleuchtungskanal oder im Betrachtungskanal N1 unterschiedliche Eigenschaften aufgeprägt werden können. Mit dem Begriff "sequentiell angeordnet" soll damit ausgedrückt werden, dass N1 bzw. M1 auf dem jeweiligen Träger in einer gegebenen Reihenfolge aufeinander folgend angeordnete optische Elemente Licht, das durch sie hindurchtritt, N1 bzw. M1 unterschiedliche optische Eigenschaften aufgeprägen.

Wenn der erste Träger und der zweite Träger jeweils unabhängig voneinander durch einen dem jeweiligen Träger zugeordneten Antrieb bewegt werden können und jeweils genau ein Betrachtungs- und Beleuchtungskanal vorhanden ist, kann N=N1 und M=M1 sein, bei den meisten Ausführungsformen der Erfindung ist aber N>N1 und M>M1.

Es sei an dieser Stelle auch explizit darauf hingewiesen, dass es auch Ausführungsformen der Erfindung gibt, bei denen mehrere Beleuchtungs- bzw. mehrere Betrachtungskanäle vorhanden sind, in die unterschiedliche Sätze von optischen Elementen eingebracht werden. Mit anderen Worten ist es also weder zwingend erforderlich, dass jedes optische Element auf einem gegebenen Träger in jeden Beleuchtungs- bzw. Betrachtungskanal eingebracht werden kann noch zwingend erforderlich, dass zu einem gegebenen Zeitpunkt in alle Beleuchtungskanäle oder in alle Betrachtungskanäle optische Elemente eingebracht sind, die dieselben optischen Eigenschaften aufprägen.

Die auf dem ersten Träger für optische Elemente angeordneten optischen Elemente sind jeweils in einem ersten Abstand R1 von der Mittelachse so angeordnet, dass der Abstand zwischen zueinander benachbarten dieser optischen Elemente zumindest für die M1 sequentiell angeordneten optischen Elemente gleich groß ist, was insbesondere erfüllt ist, wenn zur Überführung eines gegebenen optischen Elements zur Position des nächsten oder vorherigen optischen Element des Satzes von sequentiell angeordneten optischen Elementen jeweils durch eine Drehung um denselben Winkel bewerkstelligt werden kann.

Die auf dem zweiten Träger für optische Elemente angeordneten optischen Elemente sind jeweils in einem zweiten Abstand R2 von der Mittelachse so angeordnet, dass der Abstand zwischen zueinander benachbarten dieser optischen Elemente zumindest für die N1 sequentiell angeordneten optischen Elemente gleich groß ist, was auch hier insbesondere erfüllt ist, wenn zur Überführung eines gegebenen optischen Elements zur Position des nächsten oder vorherigen optischen Element des Satzes von sequentiell angeordneten optischen Elementen jeweils durch eine Drehung um denselben Winkel (der aber ein anderer Winkel als beim ersten Träger sein kann) bewerkstelligt werden kann. Dabei ist der zweite Abstand R2 größer als der erste Abstand R1.

Die Bedeutung der Beschränkung "zumindest für die N1 bzw. M1 sequentiell angeordneten Elemente" entsteht daraus, dass es insbesondere bei Wechslern, die für die Verwendung in optischen Instrumenten gedacht sind, die zwei Beleuchtungs- und zwei Betrachtungskanäle aufweisen, die jeweils Licht mit denselben oder unterschiedlichen Eigenschaften zur Beleuchtung und mit denselben oder unterschiedlichen Eigenschaften zur Betrachtung verwenden, auch sinnvoll sein kann für jeden Beleuchtungs- bzw. Betrachtungskanal einen Satz von N1 bzw. M1 sequentiell angeordneten optischen Elementen vorzusehen, wobei dann gegebenenfalls der Abstand zwischen optischen Elementen, die zu den Sätzen unterschiedlicher Beleuchtungs- oder Betrachtungskanäle gehören, größer sein kann als der Abstand zwischen optischen Elementen, die zu dem Satz desselben Beleuchtungs- oder Betrachtungskanals gehören. Dabei können sich auch die N1 bzw. M1 sequentiell angeordneten optischen Elemente des ersten Beleuchtungs- oder Betrachtungskanals und die N1 bzw. M1 sequentiell angeordneten optischen Elemente des zweiten Beleuchtungs- oder Betrachtungskanals voneinander hinsichtlich der optischen Eigenschaften unterscheiden.

Durch diese Anordnung der jeweiligen optischen Elemente auf den jeweilige Trägern ist gewährleistet, dass sie im Wesentlichen auf einer Kreisbahn liegen und/oder durch eine Drehung des jeweiligen Trägers, die für einen gegebenen Träger immer gleich groß ist, aber für unterschiedliche Träger in der Regel unterschiedlich ist, von einem optischen Element zum benachbarten optischen Element gewechselt werden kann. Die Abstände R1 und R2 sind dabei so gewählt, dass die optischen Elemente wenn der Wechsler in einem optischen Instrument verwendet wird in den mindestens einen Betrachtungs- bzw. den mindestens einen Beleuchtungskanal eingebracht werden. Ob der erste Träger mit den darauf angeordneten optischen Elementen dabei dem mindestens einen Beleuchtungskanal zugeordnet ist und der zweite Träger mit den darauf angeordneten optischen Elementen dem mindestens einen Betrachtungskanal oder umgekehrt hängt dabei von der Geometrie der Anordnung dieser Kanäle im optischen Instrument ab.

Ferner sind der erste Träger und zweite Träger derart ausgeführt, dass sie den Lichtdurchtritt an den Stellen, die vor oder hinter einem optischen Element des jeweils anderen Trägers liegen, wenn beide optischen Elemente wirksam in den jeweiligen Betrachtungs- oder Beleuchtungskanal eingebracht sind, nicht blockieren, was insbesondere der Fall ist, wenn sie dort transparent sind oder eine Öffnung aufweisen. Wann dies gegeben sein muss hängt von der Geometrie der Anordnung von Betrachtungs- oder Beleuchtungskanälen im jeweiligen optischen Instrument ab.

Sind Beleuchtungs- und Betrachtungskanäle beispielsweise nebeneinander auf demselben Radius, also derselben von einer zentralen Achse des optischen Instruments ausgehenden Linie, angeordnet, muss dies der Fall sein, wenn dieses optische Element des ersten Trägers und ein optisches Element des zweiten Trägers in einer von der Mittelachse ausgehenden Linie ausgerichtet sind. An der Stelle, die vor oder hinter dem optische Element des ersten Trägers liegt, weist der zweite Träger dann eine Öffnung auf oder ist transparent., Der erste Träger sollte dann derart ausgeführt sein, dass er, wenn ein optisches Element des ersten Trägers und ein optisches Element des zweiten Trägers in einer von der Mittelachse ausgehenden Linie ausgerichtet sind, von diesem optischen Element des zweiten Trägers überragt wird oder an der Stelle, vor oder hinter der dieses optische Element des zweiten Trägers angeordnet ist, eine Öffnung aufweist oder dort transparent ist.

Sind Beleuchtungs- und Betrachtungskanäle hingegen um einen Winkel (z.B. 90°, wie im unten diskutierten Ausführungsbeispiel) versetzt, muss diese Bedingung erfüllt sein, wenn die beiden Träger derart relativ zueinander eingestellt sind, dass dieser Winkel zwischen den Verbindungslinien zwischen der Mittelachse und den jeweiligen optischen Elementen vorhanden ist.

Diese Bedingung stellt sicher, dass keiner der Träger den Durchgang des Lichtes durch die optischen Elemente des jeweils anderen Trägers blockiert. Als Öffnung im Träger ist im Sinne dieser Offenbarung auch der freie Raum zu verstehen, der zwischen den Armen oder Strahlen eines sternförmigen Trägers vorhanden ist oder ein Bereich, in dem dieser Träger vollständig von dem anderen Träger überragt wird. Besonders einfach ist eine Ausführung des ersten Trägers als Scheibe und des zweiten Trägers als die Scheibe umgebender Kreisring oder als sternförmige Struktur, bei der die Strahlen des Sterns zwischen jeweils benachbarten auf dem ersten Träger angeordneten optischen Elementen hindurchlaufen, so dass Lichtstrahlen, die die auf dem ersten Träger angeordneten Elemente passieren, in Lücken zwischen den Strahlen des Sterns hindurchlaufen.

Der Wechsler für optische Elemente wird bestimmungsgemäß so in einem optischem Instrument eingebaut, dass seine Drehachse parallel zum Beleuchtungs- und Betrachtungskanal verläuft und dass seine Drehachse einerseits in einem Abstand R1 zum Mittelpunkt desjenigen dieser Kanäle, der näher an der Drehachse liegt und gleichzeitig in einem Abstand R2 zum Mittelpunkt desjenigen dieser Kanäle, der weiter entfernt von der Drehachse verläuft, liegt.

Die Bedingung, dass beide optische Elemente wirksam in den jeweiligen Betrachtungs- oder Beleuchtungskanal eingebracht sind, ist in einer solchen Einbausituation immer dann erfüllt, wenn das optische Element des ersten Trägers und das optische Element des zweiten Trägers in den jeweiligen Beleuchtungs- oder Betrachtungskanal hineingedreht sind und dem Licht jeweils entsprechende Eigenschaften aufprägen. In dieser Stellung dürfen sie natürlich nicht durch den Träger der optischen Elemente für die Beeinflussung der Eigenschaften des Lichts im anderen Kanal verdeckt werden, was durch die transparenten Stellen bzw. Öffnungen der Träger an entsprechenden Positionen gewährleistet ist.

Durch die Anordnung der jeweiligen optischen Elemente auf einer jeweiligen Kreisbahn auf separaten Trägern, die um dieselbe Achse herum drehbar sind und geometrisch so ausgeführt sind, dass sie den Durchgang von Licht durch die jeweiligen optischen Elementen ermöglichen, wird eine sehr kompakte Anordnung der optischen Elemente gewährleistet.

In einer bevorzugten Weiterbildung der Erfindung ist bei einem Winkel zwischen zwei benachbarten der M optischen Elementen des ersten Trägers, der die Größe **α** hat, vorgesehen, dass die N1 optischen Elemente eines Satzes von sequentiell angeordneten optischen Elementen auf dem zweiten Träger innerhalb eines Winkelbereichs von 2**α** angeordnet sind.

Wenn bei einer solchen Anordnung von optischen Elementen der erste Träger einen Mitnehmer aufweist und der zweite Träger eine Aufnahme aufweist, die sich mindestens über einen Winkelbereich von (N1-1)/N1*2**α** erstreckt und in die der Mitnehmer eingreift, so dass die seitlichen Ränder der Aufnahme jeweils einen Anschlag für den Mitnehmer bilden, kann erreicht werden, dass eine voneinander unabhängige Einstellung der beiden Träger mit einem einzigen Antrieb möglich ist, weil sich nachdem ein Kontakt zwischen Mitnehmer und Rand der Aufnahme durch eine Drehung eines Trägers in eine Richtung hergestellt ist, bei einem Weiterdrehen in diese Richtung beide Träger gedreht werden.

Natürlich gilt dies in analoger Weise, wenn der zweite Träger einen Mitnehmer aufweist und der erste Träger eine Aufnahme aufweist, die sich mindestens über einen Winkelbereich von (N1-1)/N1*2**α** erstreckt und in die der Mitnehmer eingreift, so dass die seitlichen Ränder der Aufnahme jeweils einen Anschlag für den Mitnehmer bilden.

Die Nutzung des Bauraums, den der optische Wechsler verwendet und/oder der Bauraum, den der optische Wechsler benötigt, kann verbessert werden, wenn N1>M1 ist. Ob diese Bedingung erfüllt werden kann hängt aber davon ab, ob dies mit der Position von Beleuchtungs- und Betrachtungskanal des optischen Instruments, zu dem der Wechsler gehört, kompatibel ist.

Gemäß einer besonders bevorzugten Ausführungsform der Erfindung ist N größer oder gleich N1*1,5, wobei die N-N1 optischen Elemente, die nicht zu dem Satz von N1 sequentiell angeordneten optischen Elemente gehören, derart angeordnet sind, dass sie den Satz von N-1 optischen Elementen fortsetzen, und zwar entweder einseitig oder beidseitig.

Bei einer einseitigen Fortsetzung auf der Seite des ersten optischen Elementes des Satzes von N1 sequentiell angeordneten optischen Elementen kommt als nächstes optisches Element wieder ein optisches Element mit denselben optischen Eigenschaften wie denen des letzten Elements des Satzes von N1 sequentiell angeordneten optischen Elementen, dann eines mit denselben optischen Eigenschaften wie das vorletzte usw., wobei auch der Abstand derselbe ist wie zwischen benachbarten optischen Elementen des Satzes von N1 sequentiell angeordneten optischen Elementen.

Bei einer einseitigen Fortsetzung auf der Seite des letzten optischen Elementes des Satzes von N1 sequentiell angeordneten optischen Elementen folgt als nächstes optisches Element wieder ein optisches Element mit denselben optischen Eigenschaften wie denen des ersten Elements des Satzes von N1 sequentiell angeordneten optischen Elementen, dann eines mit denselben optischen Eigenschaften wie das zweite usw., wobei auch der Abstand derselbe ist wie zwischen benachbarten optischen Elementen des Satzes von N1 sequentiell angeordneten optischen Elementen.

Bei einer beidseitigen Fortsetzung ist sowohl eine einseitige Fortsetzung auf der Seite des ersten optischen Elementes des Satzes von N1 sequentiell angeordneten optischen Elementen als auch auf der Seite des letzten optischen Elementes des Satzes von N1 sequentiell angeordneten optischen Elementen vorhanden.

Der Grund, warum dies vorteilhaft sein kann, liegt darin, dass, wenn nur ein Träger mit einem Motor angetrieben wird, für eine Drehung um den Winkel **α**, die das nächste optische Element des ersten Trägers in den Betrachtungs- oder Beleuchtungsstrahlengang einbringt, auch der zweite Träger um den Winkel **α** gedreht werden muss, was ihn aber um mehrere der auf ihm angeordneten optischen Elemente "weiterschaltet". Durch das Vorsehen weiterer optischer Elemente, die den Satz von N1 optischen Elementen fortsetzen, ist gewährleistet, dass der Verfahrweg, der nach einem solchen "Weiterschalten" zurückgelegt werden muss, um den optischen Wechsler wieder in eine Betriebsposition zu bringen, in der Licht aus dem Beleuchtungskanal und Licht aus dem Betrachtungskanal wieder durch ihn hindurchtreten kann, minimiert ist.

Dabei ist die Fortsetzung auch jeweils mit einem kompletten Satz oder mehreren kompletten Sätze von N1 sequentiell angeordneten optischen Elementen möglich und sinnvoll, insbesondere wenn zu einem Satz von sequentiell auf dem ersten Träger angeordneten optischen Elementen drei oder mehr optische Elemente gehören.

Besonders vorteilhaft ist es, wenn N ein ganzzahliges Vielfaches von N1 ist und/oder dass M ein ganzzahliges Vielfaches von M1 ist, so dass mehrere komplette Sätze von sequentiell angeordneten optischen Elementen auf dem ersten bzw. zweiten Träger angeordnet sind, insbesondere wenn sie einander fortsetzen wie oben beschrieben. Auch dies kann dazu beitragen, die zum Einstellen gegebener Kombinationen von optischen Elementen für den mindestens einen Beleuchtungs- und den mindestens einen Betrachtungskanal benötigten Verstellwege zu minimieren.

Dabei ist besonders vorteilhaft, wenn N ein geradzahliges Vielfaches von N1 ist und/oder dass M ein geradzahliges Vielfaches von M1 ist, weil dann die entsprechenden optischen Eigenschaften bei Instrumenten mit zwei Betrachtungs- und zwei Beleuchtungskanälen besonders einfach und schnell einstellbar sind.

Das erfindungsgemäße optische Instrument zeichnet sich durch einen erfindungsgemäßen Wechsler für optische Elemente aus.

Besonders bevorzugt ist es, wenn das optische Instrument zwei Betrachtungskanäle und zwei Beleuchtungskanäle aufweist und wenn die Mittelachse sowohl mittig zwischen den Betrachtungskanälen als auch mittig zwischen den Beleuchtungskanälen verläuft, so dass einerseits gleichzeitig einander gegenüberliegende optische Elemente des ersten Trägers das Licht in den beiden Betrachtungs- oder in den beiden Beleuchtungskanälen beeinflussen und andererseits gleichzeitig einander gegenüberliegende optische Elemente des zweiten Trägers das Licht in den beiden Beleuchtungs- oder Betrachtungskanälen, also jeweils den Kanälen, die die optischen Elemente des ersten Trägers nicht beeinflusst, beeinflussen. Bei einer solchen Konfiguration kann mit einem einfach aufgebauten, sehr kompakten Wechsler Einfluss auf das Licht in vier optischen Kanälen genommen werden.

In einer anderen vorteilhaften Ausführungsform des optischen Instruments weist der Wechsler die Merkmale des Anspruchs 3 oder die Merkmale des Anspruchs 4 auf und das optische Instrument genau einen Motor zum Antrieb des optischen Wechslers auf. Dies macht das optische Instrument kostengünstiger und spart Bauraum, da nur ein Motor untergebracht werden muss.

Die Erfindung wird nachfolgend anhand von Figuren, die Ausführungsbeispiele zeigen, näher erläutert. Es zeigt:
- Fig. 1:: eine Komponente eines optischen Geräts mit einem optischen Wechsler in einer teilweise geöffneten Darstellung;
- Fig. 2:: den optische Wechsler aus Figur 1, betrachtet von vorne, und
- Fig. 3a-x:: die unterschiedlichen Einstellungen des optischen Wechslers aus Figur 1, und die Bewegungen, die sie ineinander überführen.

Da die Figuren dieselbe Ausführungsform eines optischen Wechslers 100 darstellen, werden in allen Figuren dieselben Bezugszeichen verwendet. Allerdings sind zur Verbesserung der Übersichtlichkeit nicht alle Bezugszeichen in allen Figuren eingezeichnet.

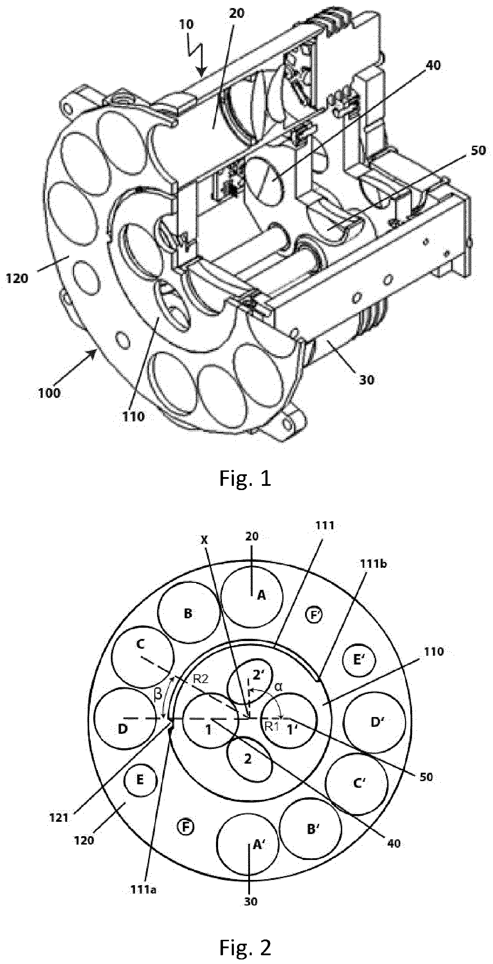

Wie man der Figur 1 entnimmt, weist die in ihr dargestellte Komponente des optischen Geräts 10 zwei Beleuchtungskanäle 20,30 und zwei Betrachtungskanäle 40,50 sowie einen optischen Wechsler 100 auf.

Der optische Wechsler 100 hat, wie man in der Figur 2 besonders gut sieht, einen ersten Träger 110, der scheibenförmig ist und einen zweiten Träger 120, der kreisringförmig ist. Der ersten Träger 110 und der zweite Träger 120 sind um eine gemeinsame Mittelachse X herum drehbar angeordnet. Diese Mittelachse liegt im Kreuzungspunkt einer gedachten Verbindungslinie zwischen den Beleuchtungskanälen 20,30 und einer gedachten Verbindungslinie zwischen den Betrachtungskanälen 40,50, jeweils mittig auf den gedachten Verbindungslinien, so dass die Mittelachsen der beiden Beleuchtungskanäle 20,30 jeweils im Abstand R2 und die Mittelachsen der beiden Betrachtungskanäle 40,50 jeweils im Abstand R1 von der Mittelachse X entfernt sind.

Auf dem ersten Träger 110 befinden sich zwei Sätze von jeweils M1=2 sequentiell angeordneten optischen Elementen 1,2 bzw. 1',2', die alle im Abstand R1 von der Mittelachse X angeordnet sind, also insgesamt M=4 optische Elemente. Die optischen Eigenschaften, die die optischen Elemente 1 und 1' dem Licht aufprägen sind dabei dieselben, dasselbe gilt für die Elemente 2 und 2'. Der Abstand zwischen eine gegebenen der optischen Elemente 1,1', 2,2' und dem jeweils benachbarten optischen Element 1',2,2',1 ist jeweils gleich groß; dementsprechend ist der Winkel α zwischen ihnen ebenfalls gleich groß und beträgt jeweils 90°.

Auf dem zweiten Träger 120 befinden sich zwei Sätze von jeweils N1=6 sequentiell angeordneten optischen Elementen A,B,C,D,E,F bzw. A',B',C',D',E',F', die alle im Abstand R2 von der Mittelachse X angeordnet sind; also insgesamt N=12 optische Elemente. Die optischen Eigenschaften, die die optischen Elemente A und A' dem Licht aufprägen sind dabei dieselben, dasselbe gilt für die Elemente B und B', C und C', D und D', E und E' sowie F und F'. Der Abstand zwischen einem gegebenen der optischen Elemente A bis F bzw. A' bis F' und dem jeweils benachbarten optischen Element ist jeweils gleich groß. Jeder der beiden Sätze von sechs sequentiell angeordneten Elementen überdeckt dabei einen Winkelbereich von 2**α**, also 180°; dementsprechend ist der Winkel **β** zwischen benachbarten optischen Elementen auf dem zweiten, kreisringförmigen Träger ebenfalls gleich groß und beträgt jeweils 30°.

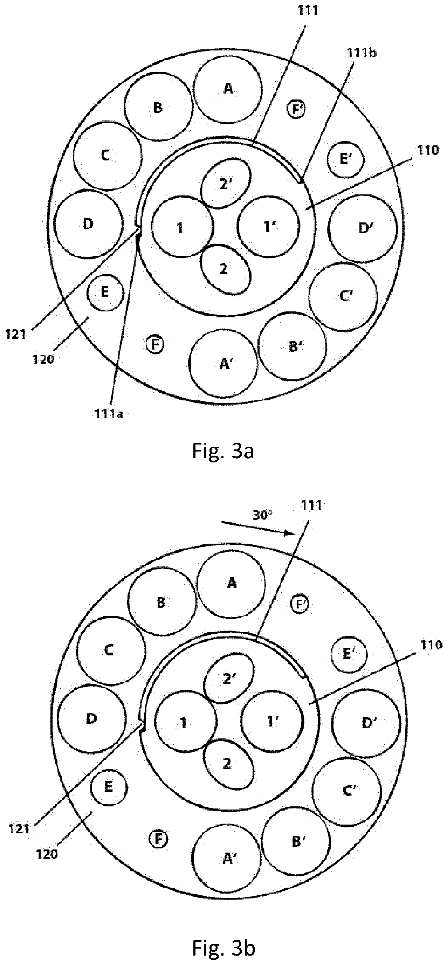

Der zweite Träger 120 weist einen Mitnehmer 121 auf. Der erste Träger 110 weist eine Aufnahme 111 auf, die sich über einen Winkelbereich von 150°, also (N1-1/N1*2**α**), erstreckt und in die der Mitnehmer 121 eingreift, so dass die seitlichen Ränder 111a,111b der Aufnahme 111 jeweils einen Anschlag für den Mitnehmer 121 bilden. Das Zusammenwirken von Mitnehmer 121 und Aufnahme 111 ermöglicht es, den ersten Träger 110 und den zweiten Träger 120 mit nur einem Motor anzutreiben und trotzdem beliebige Kombinationen von optischen Elementen des ersten Trägers 110 in den Beleuchtungskanälen und optischen Elementen des zweiten Trägers 120 in den Betrachtungskanälen einzustellen, wie nachfolgend anhand der Figuren 3a bis 3m erläutert wird.

Berücksichtig man die aus Figur 1 ersichtliche Lage von Beleuchtungs- und Betrachtungskanälen, wird beim Betrachten der Figur 3a unmittelbar klar, dass in ihr eine Situation dargestellt ist, in der die optischen Element A,A' die Beleuchtungskanäle 20,30 und die optischen Elemente 1,1' die Betrachtungskanäle 40,50 beeinflussen.

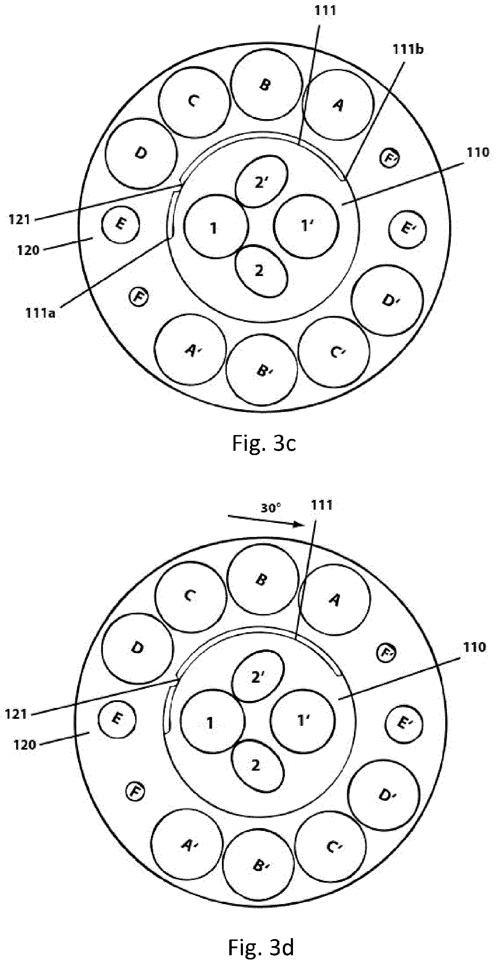

Die in Figur 3b veranschaulichte Drehung des zweiten Trägers 120 um 30° im Uhrzeigersinn verändert nichts an der Position des ersten Trägers 110, so dass sich die in Figur 3c gezeigte Situation ergibt, in der die optischen Element B,B' die Beleuchtungskanäle und die optischen Elemente 1,1' die Betrachtungskanäle beeinflussen.

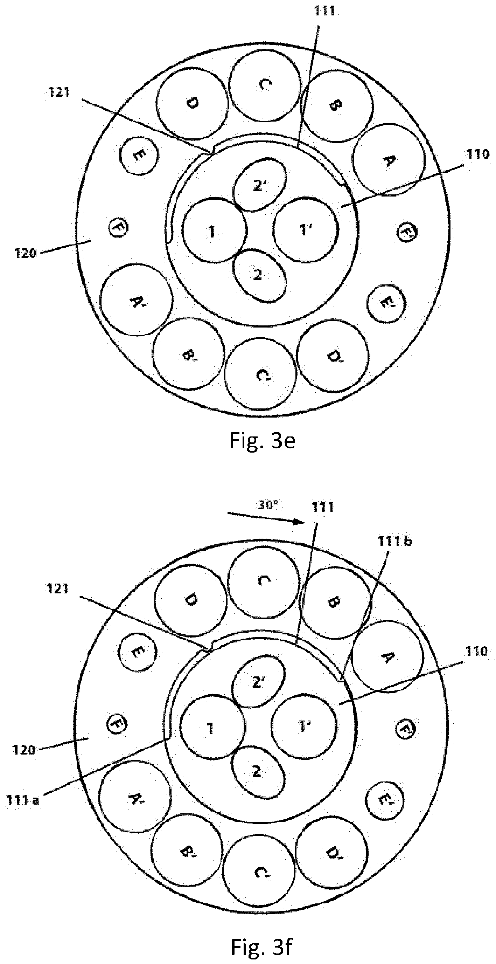

Die in Figur 3d veranschaulichte erneute Drehung des zweiten Trägers 120 um 30° im Uhrzeigersinn verändert wieder nichts an der Position des ersten Trägers 110, so dass sich die in Figur 3e gezeigte Situation ergibt, in der die optischen Element C,C' die Beleuchtungskanäle und die optischen Elemente 1,1' die Betrachtungskanäle beeinflussen.

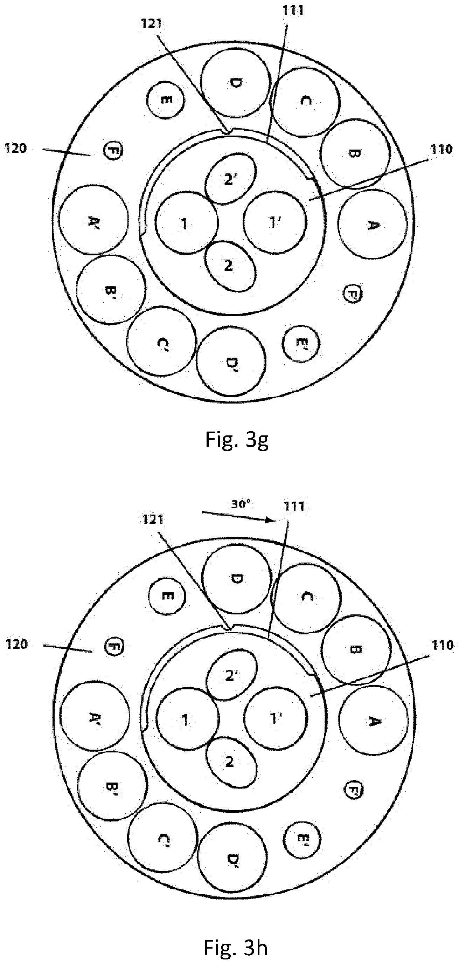

Eine weitere, in Figur 3f veranschaulichte Drehung des zweiten Trägers 120 um 30° im Uhrzeigersinn verändert noch immer nichts an der Position des ersten Trägers 110, so dass sich die in Figur 3g gezeigte Situation ergibt, in der die optischen Element D,D' die Beleuchtungskanäle und die optischen Elemente 1,1' die Betrachtungskanäle beeinflussen.

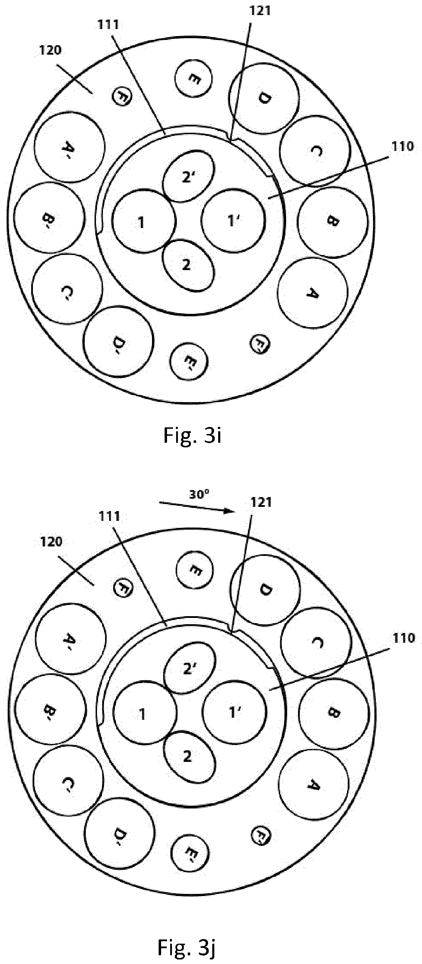

Führt man die in Figur 3h veranschaulichte weitere Drehung des zweiten Trägers 120 um 30° im Uhrzeigersinn aus, verändert auch diese nichts an der Position des ersten Trägers 110, so dass sich die in Figur 3i gezeigte Situation ergibt, in der die optischen Element E,E' die Beleuchtungskanäle und die optischen Elemente 1,1' die Betrachtungskanäle beeinflussen.

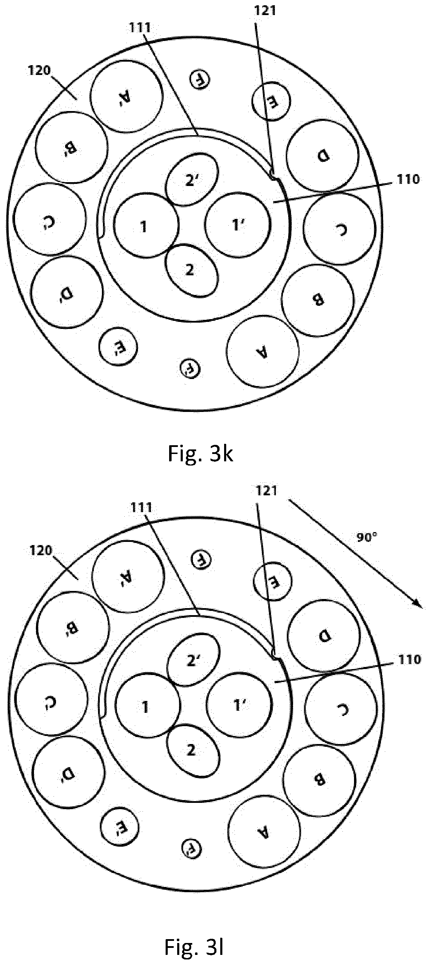

Nach der in Figur 3j veranschaulichten Drehung des zweiten Trägers 120 um 30° im Uhrzeigersinn hat sich zwar noch immer nichts an der Position des ersten Trägers 110 verändert, aber in der in Figur 3k gezeigten Situation beeinflussen nicht nur die optischen Element F,F' die Beleuchtungskanäle und die optischen Elemente 1,1' die Betrachtungskanäle, sondern der Mitnehmer 121 ist in Anlage mit dem durch den rechten Rand der Ausnehmung 111 gebildeten Anschlag 111b gebracht worden, so dass eine weitere Drehung im Uhrzeigersinn zu einer Änderung der Position des ersten Trägers 110 führt.

Da das nächste optische Element 2 bzw. 2' des Satzes von sequentiell angeordneten optischen Elementen für die Betrachtungskanäle 40,50 in einem Abstand von 90° zum bislang im Betrachtungskanal 40,50 angeordneten optischen Element 1,1' folgt, wird, wie in Figur 3l veranschaulicht wird, zum Umschalten eine Drehung um 90° im Uhrzeigersinn ausgeführt. Dementsprechend wird beim Umschalten der Wechsler für optische Elemente in eine Stellung überführt, in der die optischen Element C'(!),C die Beleuchtungskanäle und die optischen Elemente 2,2' die Betrachtungskanäle beeinflussen.

Beachtenswert ist dabei, dass in dieser Stellung optische Elemente, die optischen Elemente, die nicht zum jeweiligen Satz von N1 sequentiell angeordneten optischen Elementen gehören, sondern derart angeordnet sind, dass sie den Satz von N1 optischen Elementen fortsetzen, den Beleuchtungskanal 20,30 beeinflussen. Dies veranschaulicht auch unmittelbar, warum es sinnvoll sein kann, diesen Satz von optischen Elementen einseitig oder beidseitig fortzusetzen.

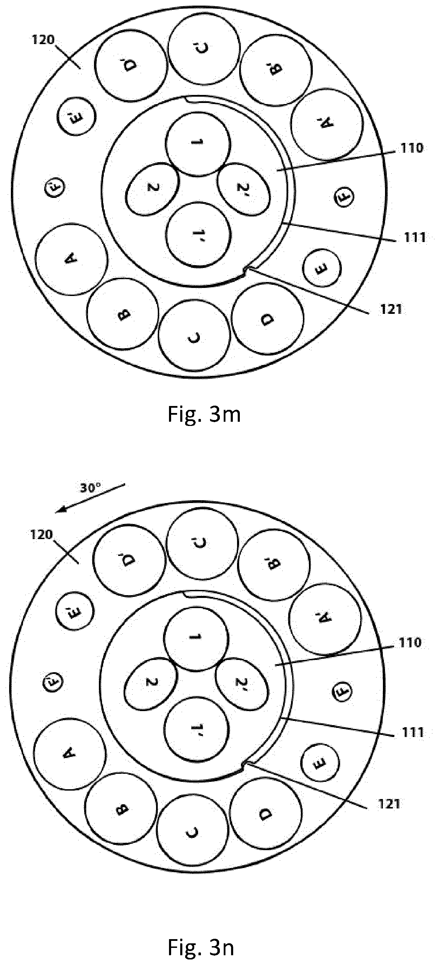

Da der Mitnehmer 121 weiterhin in Anlage mit dem durch den rechten Rand der Ausnehmung 111 gebildeten Anschlag 111b steht, muss zur Einstellung von anderen optischen Eigenschaften des Lichtes, das die Beleuchtungskanäle 20,30 zur Beleuchtung bereitstellen, während die optischen Elemente 2,2' die die Betrachtungskanäle 40,50 beeinflussen, eine Drehung gegen den Uhrzeigersinn erfolgen, wie es in Figur 3m gezeigt ist.

Angemerkt sei an dieser Stelle, dass bei analog aufgebauten Wechslern für optische Elemente, bei denen auf dem ersten Träger 110 mehr als zwei optische Elemente angeordnet sind, die Weiterschaltung zum nächsten optischen Element des ersten Trägers durch eine erneute Drehung um den Abstandswinkel zwischen den optischen Elementen des ersten Trägers in Uhrzeigersinn erfolgen würde; dementsprechend muss dann auch die Fortsetzung des Satzes von N1 optischen Elementen auf dem zweiten Träger mehr optische Elemente aufweisen.

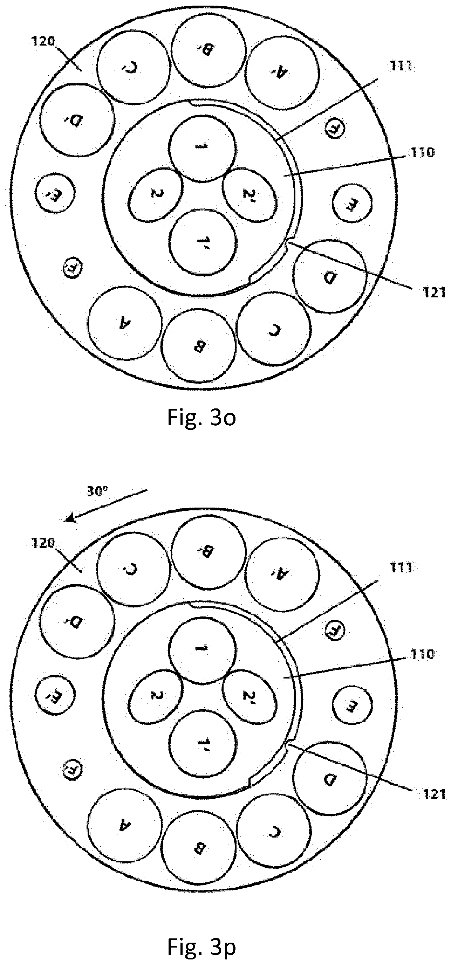

Nach der in Figur 3n dargestellten Drehung des zweiten Trägers 120 um 30° gegen beeinflussen, wie Figur 3o zeigt, die optischen Elemente B',B die Beleuchtungskanäle und die optischen Elemente 2,2' die Betrachtungskanäle. Der Mitnehmer 121 liegt nun auch nicht mehr an dem durch den rechten Rand der Ausnehmung 111 gebildeten Anschlag 111b an.

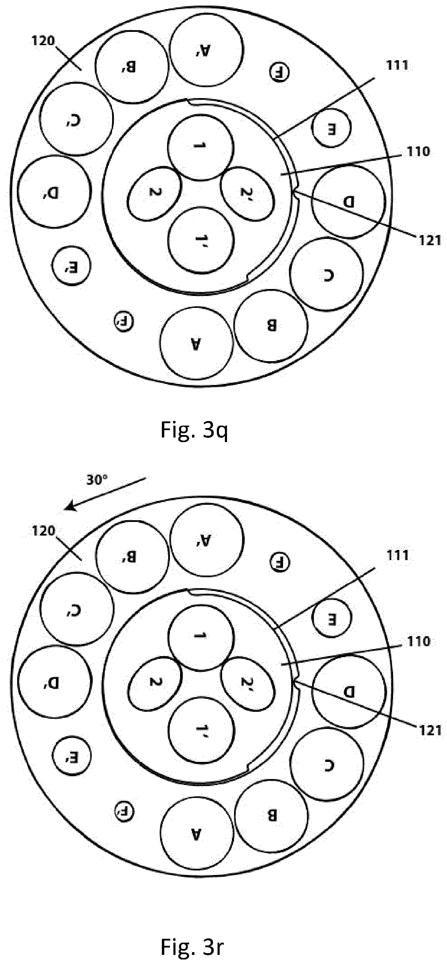

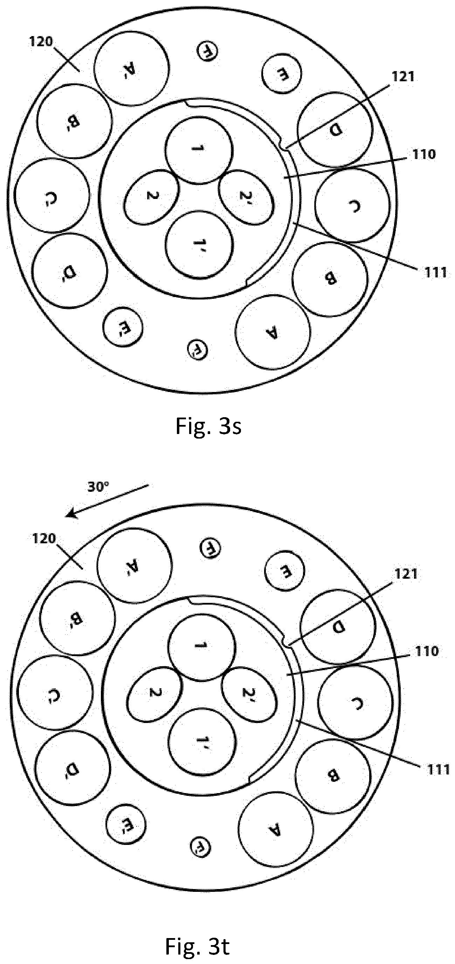

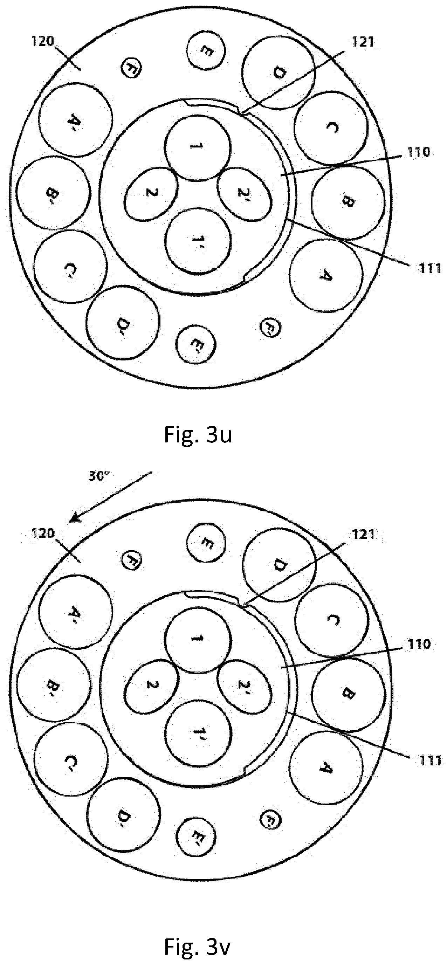

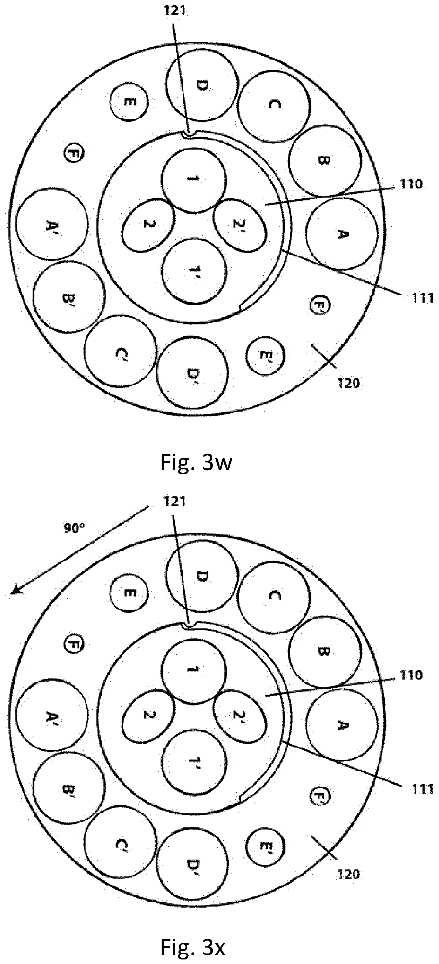

Durch weitere Drehungen des zweiten Trägers um 30° gegen den Uhrzeigersinn, die in den Figuren 3p, 3r, 3t und 3v gezeigt sind, können nun, die optischen Elemente A',A; F,F'; E,E' bzw. D,D' in den Beleuchtungsstrahlengang eingebracht werden, so dass die in den Figuren 3q, 3s, 3u und 3w gezeigten Konfigurationen des Wechslers 100 eingestellt werden.

In der zuletzt genannten Anordnung ist der Mitnehmer 121 ist in Anlage mit dem durch den linken Rand der Ausnehmung 111 gebildeten Anschlag 111a gebracht worden, so dass eine weitere Drehung gegen den Uhrzeigersinn zu einer Änderung der Position des ersten Trägers 110 führt und, wie Figur 3x veranschaulicht, durch eine Drehung um 90° gegen den Uhrzeigersinn wieder der in Figur 3a gezeigte Zustand des Wechslers 100 hergestellt werden kann.

### Bezugszeichenliste

- 10: optisches Instrument
- 20,30: Beleuchtungskanal
- 40,50: Betrachtungskanal
- 100: Wechsler
- 110: erster Träger
- 111: Aufnahme
- 111a,111b: seitlicher Rand der Aufnahme
- 120: zweiter Träger
- 121: Mitnehmer
- 1,1',2,2',A,A',B,B', C,C',D,D',E,E',F,F': optisches Element
- α,β: Winkel
- R1,R2: Abstand
- X: Mittelachse

## Patentansprüche

1. Wechsler (100) für optische Elemente eines optischen Instruments (10), wobei das optische Instrument (10) mindestens einen Betrachtungskanal (40,50) und mindestens einen Beleuchtungskanal (20,30) aufweist,
wobei der Wechsler (10) einen ersten Träger (110) für optische Elemente aufweist, der um eine Mittelachse (X) herum drehbar gelagert ist und ferner einen zweiten Träger (120) für optische Elemente aufweist, der um dieselbe Mittelachse (X) herum drehbar gelagert ist wie der erste Träger (110),
wobei auf dem ersten Träger (110) eine Anzahl M von optischen Elementen zur Beeinflussung von Licht im Betrachtungskanal (40,50) oder im Beleuchtungskanal (20,30) aufweist, die einen Satz von M1 sequentiell angeordneten optischen Elementen umfasst, mit denen dem Licht im Betrachtungskanal (40,50) oder im Beleuchtungskanal (20,30) M1 unterschiedliche Eigenschaften aufgeprägt werden können,
wobei auf dem zweiten Träger (120) eine Anzahl N von optischen Elementen zur Beeinflussung von Licht im Beleuchtungskanal (20,30) oder im Betrachtungskanal (40,50) aufweist, die einen Satz von N1 sequentiell angeordneten optischen Elementen umfasst, mit denen dem Licht im Beleuchtungskanal (20,30) oder im Betrachtungskanal (40,50) N1 unterschiedliche Eigenschaften aufgeprägt werden können,
wobei die auf dem ersten Träger (110) für optische Elemente angeordneten optischen Elementen jeweils in einem ersten Abstand (R1) von der Mittelachse (X) so angeordnet sind, dass der Abstand von zueinander benachbarten dieser optischen Elemente zumindest für die M1 sequentiell angeordneten Elemente gleich groß ist, so dass ein Wechsel zwischen zueinander benachbarten optischen Elementen jeweils durch Drehung des ersten Trägers um denselben Winkel bewirkt werden kann,
wobei die auf dem zweiten Träger (120) für optische Elemente angeordneten optischen Elemente jeweils in einem zweiten Abstand (R2) von der Mittelachse (X) so angeordnet sind, dass der Abstand von zueinander benachbarten dieser optischen Elemente zumindest für die N1 sequentiell angeordneten Elemente gleich groß ist, so dass ein Wechsel zwischen zueinander benachbarten optischen Elementen jeweils durch Drehung des zweiten Trägers um denselben Winkel bewirkt werden kann,
wobei der zweite Abstand (R2) größer als der erste Abstand (R1) ist,
wobei der erste Träger (110) und der zweite Träger (120) derart ausgeführt sind, dass sie Öffnungen oder transparente Bereiche zum Ermöglichen des Durchtritts von Licht an den Stellen, die vor oder hinter einem optischen Element des jeweils anderen Trägers liegen, wenn beide optischen Elemente wirksam in den jeweiligen Betrachtungs- oder Beleuchtungskanal eingebracht sind, aufweisen.

2. Wechsler (100) nach Anspruch 1,
**dadurch gekennzeichnet, dass** der Winkel zwischen zwei benachbarten der M optischen Elementen des ersten Trägers (110) **α** ist und dass die N1 optischen Elemente eines Satzes von sequentiell angeordneten optischen Elementen auf dem zweiten Träger (120) innerhalb eines Winkelbereichs von 2**α** angeordnet sind.

3. Wechsler (100) nach Anspruch 2,
**dadurch gekennzeichnet, dass** der erste Träger (110) einen Mitnehmer aufweist und der zweite Träger (120) eine Aufnahme aufweist, die sich mindestens über einen Winkelbereich von (N1-1)/N1*2**α** erstreckt und in die der Mitnehmer eingreift, so dass die seitlichen Ränder der Aufnahme jeweils einen Anschlag für den Mitnehmer bilden.

4. Wechsler (100) nach Anspruch 2,
**dadurch gekennzeichnet, dass** der zweite Träger (120) einen Mitnehmer (121) aufweist und der erste Träger (110) eine Aufnahme (111) aufweist, die sich mindestens über einen Winkelbereich von (N1-1)/N1*2α erstreckt und in die der Mitnehmer (121) eingreift, so dass die seitlichen Ränder (111a,111b) der Aufnahme (1119 jeweils einen Anschlag für den Mitnehmer (121) bilden.

5. Wechsler (100) nach einem der Ansprüche 1 bis 4,
**dadurch gekennzeichnet, dass** N1>M1 ist.

6. Wechsler (100) nach einem der Ansprüche 1 bis 5,
**dadurch gekennzeichnet, dass** N>=N1*1,5 ist und dass die N-N1 optischen Elemente, die nicht zu dem Satz von N1 sequentiell angeordneten optischen Elemente gehören, derart angeordnet sind, dass sie den Satz von N1 optischen Elementen einseitig oder beidseitig fortsetzen.

7. Wechsler (100) nach einem der Ansprüche 1 bis 6,
**dadurch gekennzeichnet, dass** N ein ganzzahliges Vielfaches von N1 ist und/oder dass M ein ganzzahliges Vielfaches von M1 ist.

8. Wechsler (100) nach Anspruch 7,
**dadurch gekennzeichnet, dass** N ein geradzahliges Vielfaches von N1 ist und/oder dass M ein geradzahliges Vielfaches von M1 ist.

9. Optisches Instrument (10) mit einem Wechsler (100) nach einem der Ansprüche 1 bis 8.

10. Optisches Instrument (10) nach Anspruch 9,
**dadurch gekennzeichnet, dass** das optische Instrument (10) zwei Betrachtungskanäle (40,50) und zwei Beleuchtungskanäle (20,30) aufweist und dass die Mittelachse (X) sowohl mittig zwischen den Betrachtungskanälen (40,50) als auch mittig zwischen den Beleuchtungskanälen (20,30) verläuft, so dass einerseits gleichzeitig einander gegenüberliegende optische Elemente des ersten Trägers (110) das Licht in den beiden Betrachtungskanälen (40,50) oder in den beiden Beleuchtungskanälen (20,30) beeinflussen und andererseits gleichzeitig einander gegenüberliegende optische Elemente des zweiten Trägers (120) das Licht in den beiden Beleuchtungskanälen (20,30) oder in den beiden Betrachtungskanälen (40,50) beeinflussen.

11. Optisches Instrument (10) nach einem der Ansprüche 9 oder 10,
**dadurch gekennzeichnet, dass** der Wechsler (100) die Merkmale des Anspruchs 3 oder die Merkmale des Anspruchs 4 aufweist und dass das optische Instrument (10) genau einen Motor zum Antrieb des optischen Wechslers (100) aufweist.
